# EUROPÄISCHE PATENTSCHRIFT

(11) **EP 2 285 549 B1**
(45) Veröffentlichungstag und Bekanntmachung des Hinweises auf die Patenterteilung: **07.11.2018**
(21) Anmeldenummer: 09761345.9
(22) Anmeldetag: 06.04.2009
(51) Int. Cl.: B29C 51/12, B60K 15/03, B29C 65/56

(54) **VERFAHREN ZUR HERSTELLUNG EINES KRAFTSTOFFBEHÄLTERS FÜR KFZ SOWIE KRAFTSTOFFBEHÄLTER FÜR KFZ**
METHOD FOR PRODUCING A FUEL TANK FOR A MOTOR VEHICLE AND FUEL TANK FOR A MOTOR VEHICLE
PROCÉDÉ DE FABRICATION D'UN RÉSERVOIR À CARBURANT POUR VÉHICULE AUTOMOBILE ET RÉSERVOIR À CARBURANT POUR VÉHICULE AUTOMOBILE

(30) Priorität: 11.06.2008 DE 102008027823
(43) Veröffentlichungstag der Anmeldung: 23.02.2011
(73) Patentinhaber: Kautex Textron GmbH & Co. KG, 53229 Bonn (DE)
(72) Erfinder: EULITZ, Dirk, 53115 Bonn (DE); LORENZ, Harald, 53474 Bad Neuenahr-Ahrweiler (DE); WOLTER, Gerd, 53639 Königswinter (DE)
(74) Vertreter: Richly & Ritschel Patentanwälte PartG mbB
(86) Internationale Anmeldenummer: PCT/EP2009/002508
(87) Internationale Veröffentlichungsnummer: WO 2009/149782

(56) Entgegenhaltungen:
- EP-A- 1 211 196
- EP-A2- 1 491 381
- WO-A1-2006/095024
- WO-A1-2008/061588
- DE-A1- 10 042 121
- DE-A1- 10 317 407
- DE-A1-102004 061 317
- DE-A1-102005 014 888
- GB-A- 2 281 726
- GB-A- 2 404 175
- US-A- 5 052 437
- US-A1- 2004 086 331
- US-B2- 7 143 750

## Beschreibung

Die Erfindung betrifft ein Verfahren zur Herstellung eines Kraftstoffbehälters für Kfz aus thermoplastischem Kunststoff sowie einen Kraftstoffbehälter für Kfz aus thermoplastischem Kunststoff mit wenigstens einer Betankungs- und Betriebsentlüftungseinrichtung, die im Inneren des Kraftstoffbehälters angeordnet ist, wobei sich wenigstens eine Entlüftungsleitung zwischen einem ortsfesten Anschlusspunkt an der Behälterinnenwandung und einer Durchführung durch die Behälterwandung erstreckt.

Kraftfahrzeugkraftstoffbehälter aus thermoplastischem Kunststoff werden einstückig durch Extrusionsblasformen oder durch Verschweißung von aus thermoplastischem Kunststoff spritzgegossenen Halbschalen hergestellt. Ebenso ist es bekannt, diese durch Tiefziehen oder Thermoformen von plattenförmigen Kunststoffhalbzeugen herzustellen. Üblicherweise umfassen Kraftstoffbehälter für Kraftfahrzeuge Einbauteile wie z. B. Kraftstoffpumpen, Füllstandsgeber, Entlüftungsventile, Ausperlbehälter sowie Kraftstoffdampffilter. Die bekannten Kraftstoffbehälter bestehen aus Polyolefinen, die bekanntlich für Kohlenwasserstoffe nicht permeationsdicht sind. Deshalb werden Kunststoffkraftstoffbehälter aus mehrschichtigen Extrudaten mit Barriereschichten für Kohlenwasserstoffe hergestellt. Diese Barriereschichten, beispielsweise aus EVOH, sind für flüssige und gasförmige Kohlenwasserstoffe undurchlässig. Zur Vermeidung von potentiellen Emissionspfaden für Kohlenwasserstoffe werden üblicherweise sämtliche für den Betrieb eines Kraftstoffbehälters benötigten Bauteile in das Innere desselben verlegt, wobei die Anzahl der Schnittstellen zum Kfz möglichst klein gehalten werden soll.

Bei der Herstellung von einteilig extrusionsblasgeformten Kraftstoffbehältern ist es beispielsweise bekannt, Einbauten mittels hierfür vorgesehenen Trägern in den nach unten geöffneten extrudierten Vorformlingsschlauch einzubringen. Sodann werden die Werkzeuge um den mit Einbauten versehenen Vorformlingsschlauch geschlossen, wobei der Vorformling innerhalb des geschlossenen Formwerkzeugs in bekannter Art und Weise ausgeformt wird.

Bei einem alternativen Verfahren zur Herstellung von Kunststoffkraftstoffbehälters für Kfz werden bahnförmige Extrudate hergestellt, die in einem mehrteiligen Formwerkzeug in einem ersten Schritt zu einem schalenförmigen Zwischenerzeugnis und in einem zweiten Schritt in demselben Formwerkzeug zu einem einstückigen, geschlossenen Behälter umgeformt werden. Dabei wird zwischen zwei das Formnest definierenden Formwerkzeugen ein Zwischenrahmen angeordnet, innerhalb dessen ggf. auf einem weiteren Zwischenrahmen Bauteilträger verfahrbar bzw. ein- und ausstellbar angeordnet sind. In einem Zwischenschritt werden über die Bauteilträger Funktionsbauteile in das noch warmplastische bereits zu einer Schale umgeformte Zwischenerzeugnis eingebracht und mit diesem form- und/oder stoffschlüssig verbunden.

Alternativ ist es selbstverständlich möglich, durch eine im fertigen Behälter vorzusehende Revisionsöffnung Einbauteile in dem Kraftstoffbehälter zu platzieren und zu befestigen, wobei eine solche Komplettierung eines Kraftstoffbehälters überwiegend in Handarbeit erfolgen muss und recht aufwendig ist.

Bei dem zuvor beschriebenen Verfahren wäre deshalb grundsätzlich das Einbringen aller Funktionsbauteile einschließlich der erforderlichen Entlüftungseinrichtungen in einem Arbeitsgang innerhalb des Formwerkzeuges wünschenswert.

Insbesondere die Montage von Betankungs- und Betriebsentlüftungseinrichtungen in dem herzustellenden Behälter bei dessen Ausformung stellte bisher Schwierigkeiten dar, da die Lage der Entlüftungspunkte an der späteren Behälterwandung aufgrund von Schrumpfungsverzug und Fertigungstoleranzen variieren kann. So stellt die Herstellung der Leitungsdurchführungen und die Befestigung der Ventile an den hierfür vorgesehenen Entlüftungspunkten des Kraftstoffbehälters vollautomatisch zunächst kein Problem dar, die Verbindungsleitungen zwischen den Entlüftungspunkten und beispielsweise einer Hindurchführung durch die Tankwandung müssen bislang jedoch nach wie vor in Handarbeit montiert werden. EP1211196A1 offenbart ein Verfahren zur Herstellung eines Kraftstoffbehälters. Darüber hinaus offenbart EP1211196A1 einen Kraftstoffbehälter gemäß dem Oberbegriff des Anspruchs 2.

Der Erfindung liegt daher die Aufgabe zugrunde, ein Verfahren zur Herstellung eines Kraftstoffbehälters für Kfz aus thermoplastischem Kunststoff bereitzustellen, welches diesbezüglich verbessert ist.

Der Erfindung liegt weiterhin die Aufgabe zugrunde, einen Kraftstoffbehälter der zuvor beschriebenen Art bereitzustellen, der eine weitestgehend automatisierte Einbringung der Einbauteile während des Herstellungsverfahrens ermöglicht.

Die Aufgabe wird zunächst gelöst durch ein Verfahren zur Herstellung eines Kraftstoffbehälters gemäß Anspruch 1.

Die Offenbarung kann dahingehend zusammengefasst werden, dass die Verwendung von wenigstens einem längenveränderbaren Leitungsabschnitt in einer Betankungs- und Entlüftungseinrichtung einen zusätzlichen Montagefreiheitsgrad schafft, der die vollautomatisierte Befestigung der Entlüftungseinrichtung im Kraftstoffbehälter ermöglicht. Darüber hinaus werden Schwindungs- und Quellungstoleranzen auf diese Art und Weise ausgeglichen.

Üblicherweise bestehen Belüftungseinrichtungen aus Betriebsentlüftungsventilen, Betankungsentlüftungsventilen und Sicherheitsventilen, beispielsweise Roll-over-Ventilen, die die Entlüftungsleitung im Überschlagsfall verschließen. Die Entlüftungsventile, die mehrere Funktionalitäten in einem Ventilgehäuse vereinigen können, sind üblicherweise an verschiedenen entlegenen Entlüftungspunkten im Kraftstoffbehälter anzuordnen, und zwar an der in Einbaulage oberen Innenwandung. Ohne zusätzliche Montagefreiheitsgrade gestaltet sich die Montage solcher Leitungsspinnen bzw. Leitungsnetze schwierig, alleine wegen der komplexen Konturen moderner Kraftstoffbehälter. Die erfindungsgemäße Lösung ermöglicht es, beliebige Montagefreiheitsgrade für eine automatisierte Befestigung mit pneumatischen Handhabungseinrichtungen zu bewerkstelligen.

Erfindungsgemäß ist vorgesehen, dass der Betrag der Längenveränderbarkeit der Entlüftungsleitung so gewählt wird, dass dieser etwa dem Weg entspricht, den der Anschlussfitting bei der Durchstoßung der Wandung des Zwischenerzeugnisses vollzieht. Auf diese Art und Weise ist sichergestellt, dass die betreffende Entlüftungsleitung die Durchdringungsbewegung nachvollziehen kann. Für den Fall, dass die Leitung beispielsweise als Wellrohr ausgebildet ist, ist ebenfalls sichergestellt, dass die Leitung im fertigen Behälter nicht in Gewichtskraftrichtung durchhängt, was grundsätzlich nicht wünschenswert ist. In Leitungsschlaufen kann sich kondensierter Kraftstoff sammeln, der bei der Entlüftung des Kraftstoffbehälters ggf. mitgerissen wird. Eine solche Siphonbildung gilt es zu vermeiden.

Die der Erfindung zugrundeliegende Aufgabe wird weiterhin gelöst durch einen Kraftstoffbehälter gemäß Anspruch 2.

Die Entlüftungsleitung kann beispielsweise wenigstens abschnittsweise gewellt oder balgartig ausgebildet sein. Alternativ hierzu kann die Entlüftungsleitung abwechselnd Abschnitte weicheren und härteren Materials umfassen.

Bei einer weiteren alternativen Ausgestaltung des Kraftstoffbehälters ist vorgesehen, dass die Entlüftungsleitung mehrteilig ausgebildet ist, wobei ineinander geführte Abschnitte der Entlüftungsleitung teleskopierbar sind.

Durch die Ausgestaltung der Entlüftungsleitung sind in vorteilhafter Art und Weise größere Längenanpassungen möglich, die erforderlich sind, um entsprechende Montagefreiheitsgrade zu gewährleisten, beispielsweise wenn eine vorkonfektionierte Entlüftungsleitung mit einem Entlüftungsventil einerseits mit der Behälterwandung verschweißt werden soll und andererseits mittels des Anschlussfittings die Behälterwand durchdringen soll.

Ein 30 Leitungsverbund kann vollständig vormontiert in dem Behälter angeordnet werden. Innerhalb des Fertigungsverfahrens ist kein nachträgliches Verbinden der Bauteile von Hand oder automatisiert erforderlich. Die vorkonfektionierte Entlüftungseinrichtung kann so ausgelegt sein, dass zwei oder mehr verbundene Bauteile auf einer gemeinsamen Achse angeordnet sein können, die sich anwendungs- und/oder verfahrensbedingt voneinander entfernen oder aufeinander zu bewegen müssen.

Die teleskopierbare Ausbildung der Entlüftungsleitung hat zudem noch den Vorzug, dass eine Siphonbildung konstruktionsbedingt zuverlässig vermieden wird.

Erfindungsgemäß entspricht der Betrag der Längenvariabilität der Entlüftungsleitung dem Montagefreiheitsgrad in Längsrichtung der Entlüftungsleitung bei der Befestigung der Betankungs- und Betriebsentlüftungsleitung an der Behälterinnenwandung. Dabei können eventuelle Schwindungs- und Quellungstoleranzen mitberücksichtigt werden.

Zweckmäßigerweise sind die ineinander geführten Teile der Entlüftungsleitung gegeneinander abgedichtet.

Bei Verwendung einer gewellten Entlüftungsleitung ist es beispielsweise zweckmäßig, die Entlüftungsleitung zwischen ihren Anschlusspunkten gegen die in Einbaulage wirkende Gewichtskraft abzustützen.

Hierzu kann vorgesehen sein, dass die Entlüftungsleitung mittels wenigstens einer Halteklammer an der Behälterwandung aufgehängt ist.

Die Halteklammer kann beispielsweise als Haltefeder ausgebildet sein. Hierdurch wird eine Siphonbildung der Entlüftungsleitung vermieden.

Die Halteklammer bzw. Haltefeder ist zweckmäßigerweise so angeordnet, dass die Entlüftungsleitung in gestrecktem Zustand, d. h. nach vollzogener Durchstoßungsbewegung des Anschlussfittings, zumindest teilweise von der Halteklammer umgriffen wird. Hierdurch ist eine automatisierte Montage der in den Behälter einzubringenden Komponenten gewährleistet.

Bei dem Kraftstoffbehälter gemäß der Offenbarung sind vorzugsweise der Anschlusspunkt an der Behälterinnenwandung und die Durchführung durch die Behälterinnenwandung an sich im Winkel zueinander erstreckenden Abschnitten der Behälterwandung vorgesehen.

Die Erfindung wird nachstehend anhand eines in den Zeichnungen dargestellten Ausführungsbeispiels erläutert:
Es zeigen:
- Figur 1: eine Ansicht der Formwerkzeuge zur Herstellung des Kraftstoffbehälters gemäß der Erfindung in geöffnetem Zustand,
- Figur 2: eine schematische Darstellung der Formwerkzeuge in geschlossenem Zustand bei der Ausformung der Zwischenerzeugnisse,
- Figur 3: eine Ansicht der Formwerkzeuge entsprechend der Ansicht der Figuren 1 und 2, wobei der Mittenrahmen zwischen den Formhälften verfahren ist, sodass sich die Formhälften zwecks Verbindung der Zwischenerzeugnisse schließen können,
- Figur 4: einen Schnitt durch eines der Zwischenerzeugnisse auf dem Weg zum fertigen Kraftstoffbehälter während der Montage der Entlüftungseinrichtung nach einer ersten Variante des Kraftstoffbehälters,
- Figur 5: eine der Figur 4 entsprechende Ansicht mit der Entlüftungseinrichtung in ihrer Endlänge,
- Figuren 6-8: einen Schnitt entlang der Linien VI-VI in Figur 4 während der Fixierung der Entlüftungsleitung in der Halteklammer,
- Figur 9: eine der Figur 4 entsprechende Ansicht einer weiteren Variante des Kraftstoffbehälters gemäß der Erfindung und
- Figur 10: die in Figur 9 dargestellte Entlüftungseinrichtung in der Endlage.

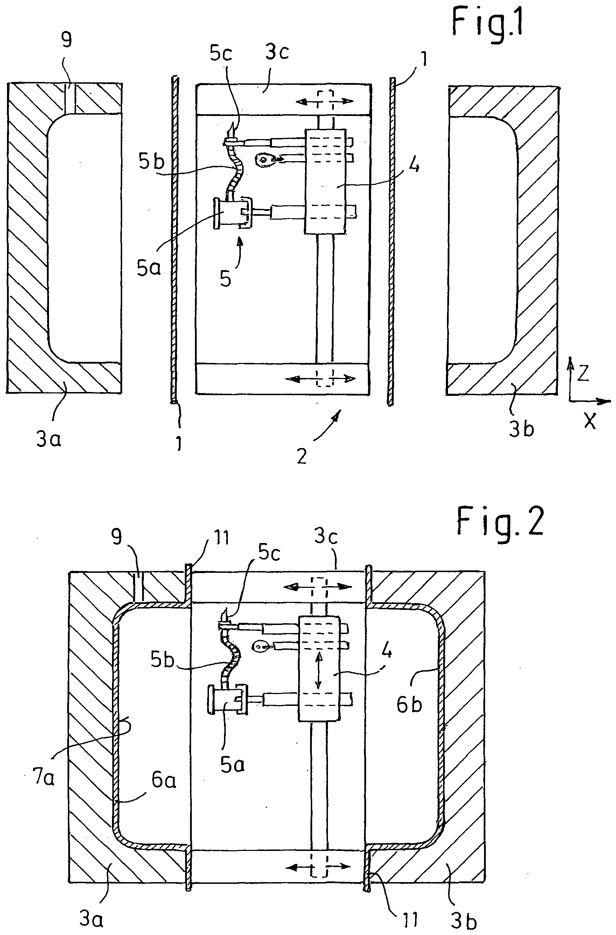

Das Verfahren gemäß der Offenbarung wird im Wesentlichen zunächst einmal anhand der Figuren 1 bis 3 erläutert. Dieses umfasst das Extrudieren zweier bahn- oder lappenförmiger Vorformlinge 1 aus thermoplastischem Kunststoff aus einem oder mehreren nicht dargestellten, über dem Werkzeug 2 angeordneten Extrudern. Dabei können die Vorformlinge 1 durch Aufschneiden eines schlauchförmigen Vorformlings erhalten worden sein oder alternativ aus Breitschlitzdüsen extrudiert worden sein. Die Vorformlinge 1 bestehen im Wesentlichen aus einem 6-schichtigen Co-Extrudat aus Polyethylen, Regrind-(Scrap-), Haftvermittlerschichten und EVOH-Barriereschichten für Kohlenwasserstoffe. Der Schichtaufbau solcher Extrudate ist grundsätzlich bekannt. Die Vorformlinge können unmittelbar oberhalb der Werkzeuge in Gewichtskraftrichtung extrudiert worden sein, alternativ können diese mittels einer Handhabungsvorrichtung an einem Extrusionskopf abgenommen und in die Werkzeuge 2 verbracht worden sein.

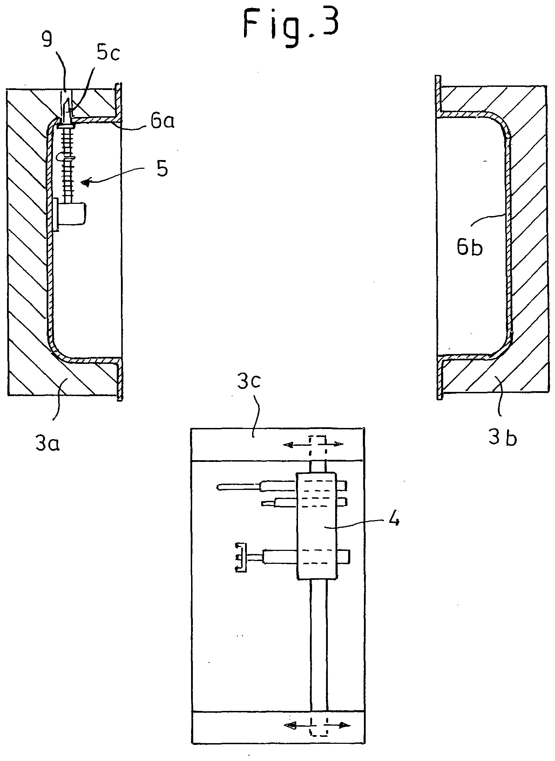

Die Werkzeuge 2 sind in Figuren 1 bis 3 in der Draufsicht, teilweise geschnitten dargestellt. Diese umfassen zwei Außenformen 3a, 3b und eine Mittenform 3c in Form eines Zwischenrahmens. Die Außenformen 3a, 3b sind im Sinne einer Öffnungs- und Schließbewegung aufeinander zu und voneinander weg verfahrbar. Die Mittenform 3c ist quer hierzu verfahrbar, wie dies beispielsweise in Figur 3 dargestellt ist.

Die Bewegungsachsen sind in Form eines Koordinatensystems beispielsweise zu Figur 1 eingezeichnet, wobei die Öffnungs- und Schließbewegung der Außenformen in der X-Achse stattfindet und die Verfahrbewegung der Mittenform 3c in der Z-Achse stattfindet.

Innerhalb der Mittenform 3c ist ein pneumatisch verfahrbarer Bauteilträger 4 angeordnet, der mittels nicht näher bezeichneter Pneumatikzylinder in der X- und Z-Achse verfahrbar ist, wobei dieser in der Zeichnung eine Betankungsentlüftungseinrichtung 5 des späteren Kraftstoffbehälters aufnimmt. Bei dem beschriebenen Ausführungsbeispiel sind die Bauteilträger 4 als pneumatisch verfahrbare Bauteilträger beschrieben, die Offenbarung ist jedoch so zu verstehen, dass diese sowohl elektromechanisch als auch hydraulisch verfahrbar sein können. Weiterhin ist die Offenbarung am Beispiel einer in den Kraftstoffbehälter einzubringenden Betankungsentlüftungseinrichtung beschrieben. Die Offenbarung ist allerdings so zu verstehen, dass die Betankungsentlüftungseinrichtung stellvertretend für alle erdenklichen, in den Kraftstoffbehälter einzubringenden Einbauten ist. Diese umfasst eine Betankungsentlüftungsventil 5a als Füllstandsbegrenzungsventil, eine Entlüftungsleitung 5b und einen Anschlussfitting 5c, die miteinander verbunden sind. Die Betankungsentlüftungs-einrichtung 5 ist zu Anschauungszwecken stark vereinfacht dargestellt, tatsächlich besitzt ein Kraftstoffbehälter für Kfz verschiedene Entlüftungspunkte, die untereinander mit Entlüftungsleitungen verbunden sind. Die Entlüftungspunkte sind entweder als Füllstandsbegrenzungsventile mit Roll-over-Funktion oder als einfache Betriebsentlüftungsventile ausgebildet und über einen oder mehrere Leitungsstränge miteinander verbunden.

Bei dem dargestellten Ausführungsbeispiel ist jede der Komponenten der Betankungsentlüftungseinrichtung 5 über nicht näher bezeichnete Pneumatikzylinder und entsprechende Aufnahmen in den Raumachsen verfahrbar bzw. bewegbar.

Figur 1 zeigt die Herstellung des Kraftstoffbehälters bei geöffnetem Werkzeug. Die Außenformen 3a, 3b definieren das die Behälterkontur bestimmende Formnest.

In einem ersten Verfahrensschritt werden die Außenformen 3a, 3b in Richtung der X-Achse gegen die Mittenform 3c verfahren bzw. geschlossen. Das noch warmplastische Extrudat bzw. die noch warmplastischen Vorformlinge 1 werden durch Aufbringung von Differenzdruck innerhalb des durch die Außenformen 3a, 3b definierten Formnetzes bzw. innerhalb der durch die Außenformen 3a, 3b gebildeten Kavität aufgeweitet, umgeformt und an die Formwandungen angelegt, wie dies beispielsweise in Figur 2 dargestellt ist. Auf diese Art und Weise werden zwei schalenförmige Zwischenerzeugnisse 6 erhalten.

Über den Bauteilträger 4 wird sodann die Betankungsentlüftungseinrichtung 5 an einer Innenwandung 7a eines Zwischenerzeugnisses 6a platziert. Dabei wird zunächst das Betankungsentlüftungsventil 5a gegen die noch warmplastische Innenwandung 7a gedrückt. Das Betankungsentlüftungsventil 5a ist an seinem Umfang mit nicht dargestellten Befestigungsfüßen versehen, die jeweils mit Durchbrechungen versehen sind. Bei dem Anpressen des Betankungsentlüftungsventils 5a gegen die noch warmplastische Innenwandung 7a des Zwischenerzeugnisses 6a durchfließt und hinterfließt das thermoplastische Extrudat die Durchbrechungen der Befestigungsfüße des Betankungsentlüftungsventils 5a, sodass eine form- und ggf. auch stoffschlüssige Verbindung zwischen dem Betankungsentlüftungsventil 5a und der Innenwandung 7a erzielt wird. Der von dem Betankungsentlüftungsventil 5a abliegende Anschlussfitting 5c hingegen wird in Richtung der Z-Achse so bewegt, dass er die Wandung des Zwischenerzeugnisses 6a durchstößt bzw. durchdringt. Hierzu ist der Anschlussfitting 5c mit einer Durchdringungsspitze 8 versehen. In der Außenform 3a ist an entsprechender Stelle eine Aufnahme 9 für den Anschlussfitting 5c vorgesehen. Der Anschlussfitting 5c ist weiterhin mit einem umlaufenden Kragen 10 ausgestattet, der mit der Innenwandung 7a des Zwischenerzeugnisses 6a verschweißt wird.

In einem weiteren Verfahrensschritt werden die Außenformen 3a, 3b in der X-Achse verfahren bzw. geöffnet, die Mittenform 3c wird in Richtung der Z-Achse zwischen den Außenformen 3a, 3b herausgefahren, sodann schließen sich die Außenformen 3a, 3b, wobei die Zwischenerzeugnisse 6a, 6b an ihrem Umfassungsrand 11 miteinander zu einem geschlossenen Kraftstoffbehälter verschweißen.

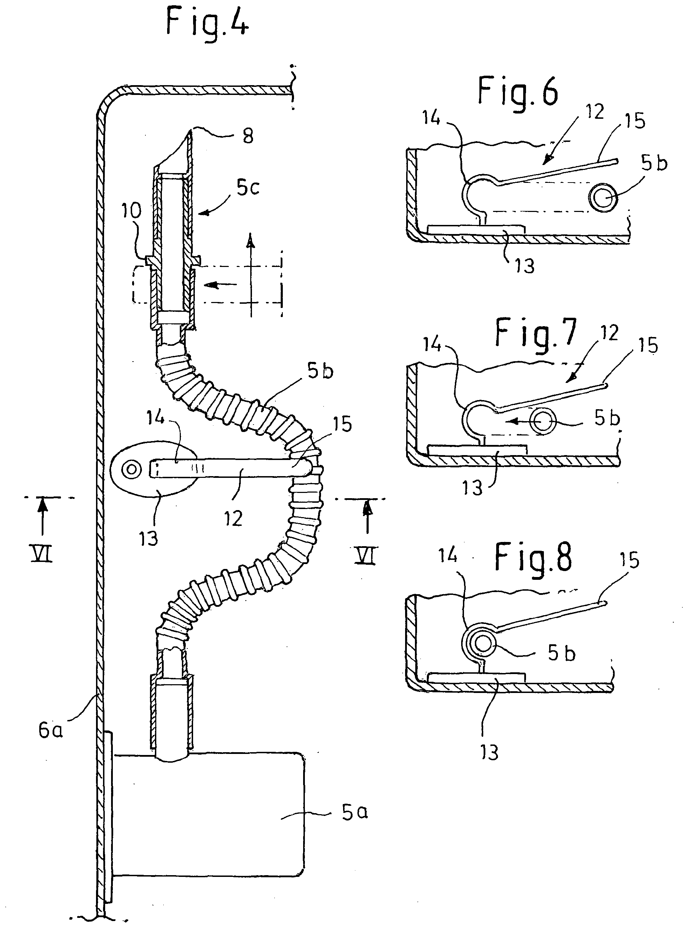

Im Folgenden wird zunächst Bezug aufgenommen auf die Figuren 4 bis 8, die die Entstehung eines Kraftstoffbehälters nach einem ersten Ausführungsbeispiel der Erfindung veranschaulichen.

Wie dies insbesondere der Figur 4 zu entnehmen ist, ist bei dem ersten Ausführungsbeispiel des Kraftstoffbehälters gemäß der Offenbarung vorgesehen, dass die Entlüftungsleitung 5b als Wellrohr ausgebildet ist, welches konstruktionsbedingt eine etwas geringere Steifigkeit als eine üblicherweise verlegte Entlüftungsleitung aufweist und eine gewisse Längenveränderbarkeit bietet. In Figur 4 ist die Entlüftungsleitung 5b, die sich zwischen dem Anschlussfitting 5c und dem Betankungsentlüftungsventil 5a erstreckt mäanderförmig gekrümmt dargestellt. An dieser Stelle sei betont, dass der mäanderförmige Verlauf der Entlüftungsleitung 5b aus Anschauungsgründen übertrieben dargestellt ist. Diese kann in der gezeigten Lage auch vollständig gestreckt sein, wobei die Wellungen der Entlüftungsleitung eine Längenvariabilität dieser mindestens im Umfang des benötigten Montagefreiheitsgrads in Richtung der Z-Achse zulässt. Die Längenvariabilität entspricht etwa der von dem Anschlussfitting 5c zu vollziehenden Durchdringungsbewegung durch die Innenwandung 7a des Zwischenerzeugnisses 6a.

Um wegen der konstruktionsbedingt geringeren Eigensteifigkeit der Entlüftungsleitung 5b eine Siphonbildung dieser aufgrund von Schwerkrafteinwirkung entgegenzuwirken, ist an der Innenwandung 7a zusätzlich die Platzierung wenigstens einer Haltefeder 12 vorgesehen. Die Haltefeder 12 ist über eine Sockelplatte 13 mit der Innenwandung 7a verschweißt. Die Haltefeder 12 umfasst einen der kreisrunden Außenkontur der Entlüftungsleitungen 5b angepassten kreisbogenförmigen Abschnitt 14 und eine sich daran anschließende Führungszunge 15, die dazu dient, die Entlüftungsleitung 5 in die gehaltene Endlage zu führen, wie dies in den Figuren 6 bis 8 veranschaulicht ist.

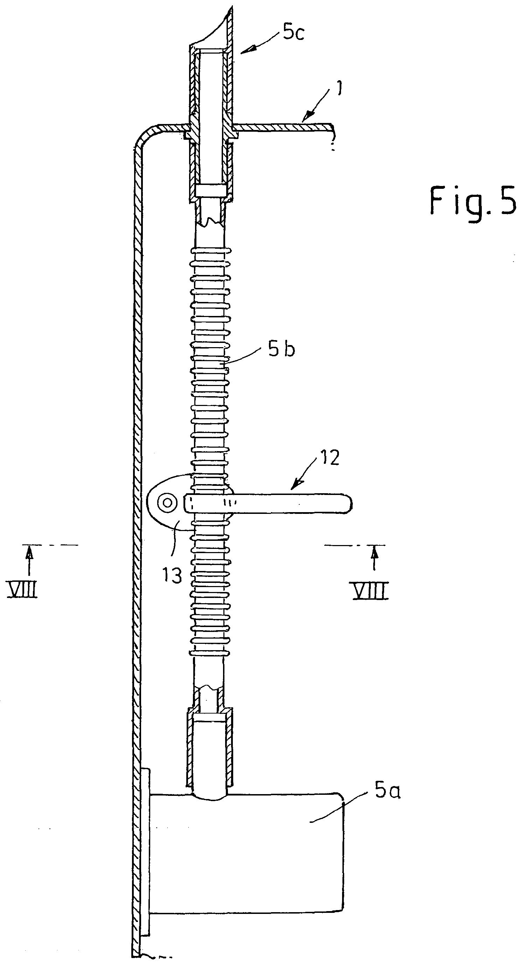

Wie dies aus der Zusammenschau der Figuren 4 bis 8 ersichtlich ist, verursacht eine Bewegung der Durchdringungsspitze in Richtung der Z-Achse eine Streckungsbewegung der Entlüftungsleitung 5b, dergestalt, dass ein eventuell gebogener Abschnitt eine Bewegung in Richtung der X-Achse vollzieht. Die Entlüftungsleitung 5b gerät unter Spannung und rutscht geführt durch die Führungszunge 15 in den kreisbogenförmigen Abschnitt der Haltefeder 12, wo sie einrastet. Auf diese Art und Weise wird die Entlüftungsleitung 5b entgegen der Schwerkraftrichtung in Einbaulage des Kraftstoffbehälters gehalten, eine Siphonbildung wird zuverlässig verhindert. Die Endlage der Entlüftungsleitung 5b ist aus Figur 5 ersichtlich.

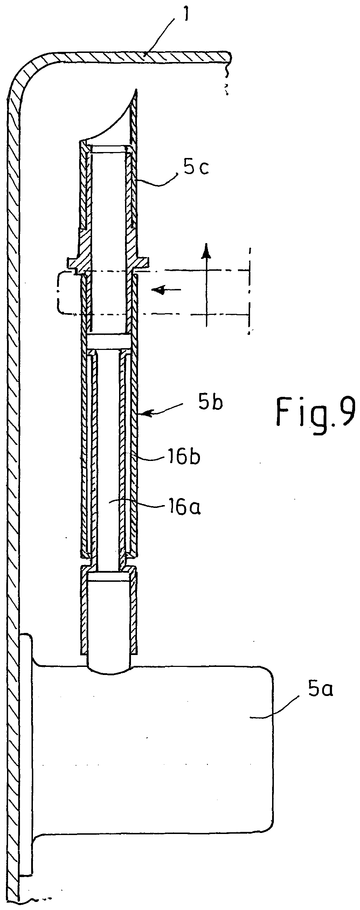

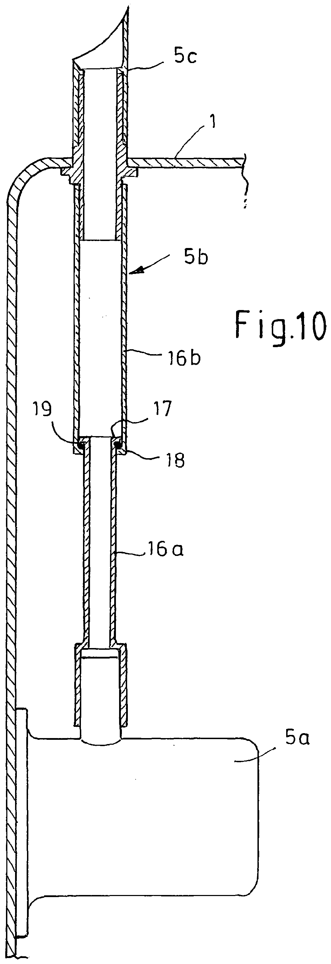

Im Folgenden wird Bezug genommen auf die Figuren 9 und 10, in denen die Herstellung einer alternativen Variante des Kraftstoffbehälters gemäß der Erfindung veranschaulicht ist.

An dieser Stelle sei angemerkt, dass in allen Figuren gleiche Bauteile mit gleichen Bezugszeichen versehen werden.

Die Entlüftungsleitung 5b besteht im Falle des in den Figuren 9 und 10 dargestellten Ausführungsbeispiels aus zwei ineinander geführten, teleskopierbaren Rohrabschnitten 16a, 16b. Der Außendurchmesser des Rohrabschnitts 16a ist geringfügig kleiner als der Innendurchmesser des Rohrabschnitts 16b. An seinem dem Rohrabschnitt 16b zugewandten Ende ist der Rohrabschnitt 16a mit einem umlaufenden Kragen 17 versehen, der im ausgezogenen Zustand gegen einen Bund 18 des Rohrabschnitts 16a anliegt, und zwar zwischen einer O-Ring-Dichtung 19.

In den Figuren 9 und 10 ist nur eine mögliche Variante der teleskopierbaren Entlüftungsleitung 5b dargestellt. Alternativ kann der ausziehbare Rohrabschnitt 16b, der den Anschlussfitting 5c aufnimmt, mit einem kleineren Durchmesser als der Rohrabschnitt 16a ausgebildet sein.

Die Offenbarung ist so zu verstehen, dass jeder beliebige Zwischenabschnitt der Entlüftungsleitung 5b teleskopierbar oder flexibel als Wellrohr ausgebildet sein kann, wohingegen in den Zeichnungen jeweils die gesamte Entlüftungsleitung so dargestellt ist. Alternativ kann die Entlüftungsleitung aus Abschnitten unterschiedlicher Elastizität (hart-weich-hart) zusammengesetzt sein.

### Bezugszeichenliste

- 1: Vorformling
- 2: Werkzeuge
- 3a, 3b: Außenformen
- 3c: Mittenform
- 4: Bauteilträger
- 5: Betankungsentlüftungseinrichtung
- 5a: Betankungsentlüftungsventil
- 5b: Entlüftungsleitung
- 5c: Anschlussfitting
- 6a, 6b: Zwischenerzeugnisse
- 7a: Innenwandung
- 8: Durchdringungsspitze
- 9: Aufnahme
- 10: Kragen
- 11: Umfassungsrand
- 12: Haltefeder
- 13: Sockelplatte
- 14: kreisbogenförmiger Abschnitt der Haltefeder
- 15: Führungszunge der Haltefeder
- 16a, 16b: Rohrabschnitte
- 17: Kragen
- 18: Bund
- 19: O-Ring-Dichtung

## Patentansprüche

1. Verfahren zur Herstellung eines Kraftstoffbehälters für Kfz aus thermoplastischem Kunststoff, umfassend die Herstellung von bahnförmigen Vorformlingen (1), die Umformung der Vorformlinge in der ersten Hitze in einem mehrteiligen Formwerkzeug (3a, 3b, 3c) in einem ersten Schritt zu schalenförmigen Zwischenerzeugnissen (6a, 6b) und in einem zweiten Schritt in demselben Formwerkzeug zu einem einstückigen, geschlossenen Behälter, wobei zwischen dem ersten und dem zweiten Schritt wenigstens eine Betankungs- (5) und/oder Betriebsentlüftungseinrichtung an wenigstens einer Innenwandung (7a) eines Zwischenerzeugnisses befestigt wird, derart, dass wenigstens ein vormontierter Teil der Betankungs- und/oder Betriebsentlüftungseinrichtung mit wenigstens einem Anschlussfitting (5c), wenigstens einer Entlüftungsleitung (5b) und wenigstens einem Funktionsbauteil in einem Arbeitsgang stoff- und/oder formschlüssig mit der Innenwandung verbunden wird, wobei die Wandung des Zwischenerzeugnisses mit dem Anschlussfitting bei der Montage durchdrungen wird unter Verwendung wenigstens eines längenveränderbaren Leitungsabschnitts als Teil der Entlüftungsleitung, wobei der Betrag der Längenveränderbarkeit der Entlüftungsleitung so gewählt wird, dass dieser dem Weg entspricht, den der Anschlussfitting bei der Durchdringung der Wandung des Zwischenerzeugnisses vollzieht.

2. Kraftstoffbehälter für Kfz aus thermoplastischem Kunststoff mit wenigstens einer Betankungs- und/oder Betriebsentlüftungseinrichtung (5), die im Inneren des Kraftstoffbehälters angeordnet ist, wobei sich wenigstens eine Entlüftungsleitung (5b) zwischen einem ortsfesten Anschlusspunkt an der Behälterinnenwandung und einer Durchführung durch die Behälterwandung erstreckt, wobei die Entlüftungsleitung (5b) längenveränderbar ausgebildet ist, **dadurch gekennzeichnet, dass** der Betrag der Längenvariabilität der Entlüftungsleitung (5b) dem Montagefreiheitsgrad in Längsrichtung der Entlüftungsleitung (5b) bei der Befestigung der Betankungs- und/oder Betriebsentlüftungseinrichtung (5) an der Behälterinnenwandung entspricht.

3. Kraftstoffbehälter nach Anspruch 2, **dadurch gekennzeichnet, dass** die Entlüftungsleitung (5b) wenigstens abschnittsweise gewellt oder balgartig ausgebildet ist.

4. Kraftstoffbehälter nach einem der Ansprüche 2 oder 3, **dadurch gekennzeichnet, dass** die Entlüftungsleitung (5b) mehrteilig ausgebildet ist, wobei ineinander geführte Abschnitte (16a, b) der Entlüftungsleitung (5b) teleskopierbar ausgebildet sind.

5. Kraftstoffbehälter nach Anspruch 4, **dadurch gekennzeichnet, dass** die ineinander geführten Teile der Entlüftungsleitung (5b) gegeneinander abgedichtet sind.

6. Kraftstoffbehälter nach einem der Ansprüche 2 oder 3, **dadurch gekennzeichnet, dass** die Entlüftungsleitung (5b) zwischen ihren Anschlusspunkten gegen die in Einbaulage wirkende Gewichtskraft gestützt ist.

7. Kraftstoffbehälter nach Anspruch 6, **dadurch gekennzeichnet, dass** die Entlüftungsleitung (5b) mittels wenigstens einer Halteklammer an der Behälterwandung aufgehängt ist.

8. Kraftstoffbehälter nach Anspruch 7, **dadurch gekennzeichnet, dass** die Halteklammer als Haltefeder (12) ausgebildet ist.

9. Kraftstoffbehälter nach einem der Ansprüche 2 bis 8, **dadurch gekennzeichnet, dass** wenigstens ein Anschlusspunkt an der Behälterinnenwandung und eine Durchführung durch die Behälterwandung an sich in einem Winkel zueinander erstreckenden Abschnitten der Behälterwandung vorgesehen sind.

## Claims

1. Method for producing a fuel container for motor vehicles from thermoplastic material, comprising the production of web-type preforms (1), the shaping of the preforms in the first heat in a multi-part moulding tool (3a, 3b, 3c) to form shell-shaped intermediate products (6a, 6b) in a first step, and to form a one-piece, closed container in the same moulding tool in a second step, at least one tank-filling (5) and/or operational venting device being fastened to at least one inner wall (7a) of an intermediate product between the first and second steps in such a manner that at least one preassembled part of the tank-filling and/or operational venting device with at least one connection fitting (5c), at least one vent line (5b) and at least one functional component is connected to the inner wall by a material and/or form-fitting joint in one work cycle, the wall of the intermediate product being penetrated by the connection fitting during assembly, with the use of at least one conduit section of variable length as a part of the vent line, the amount of length-variability of the vent line being selected such that this amount corresponds to the distance travelled by the connection fitting in penetrating the wall of the intermediate product.

2. Fuel container for motor vehicles of thermoplastic material with at least one tank-filling and/or operational venting device (5) which is arranged in the interior of the fuel container, at least one vent line (5b) extending between a fixed connection point on the inner wall of the container and an opening through the container wall, the vent line (5b) being configured to be variable in length, **characterised in that** the amount of length-variability of the vent line (5b) corresponds to the degree of freedom of assembly in the longitudinal direction of the vent line (5b) during fastening of the tank-filling and/or operational venting device (5) to the inner wall of the container.

3. Fuel container according to Claim 2, **characterised in that** the vent line (5b) has a corrugated or bellows-type configuration at least zonally.

4. Fuel container according to either of Claims 2 and 3, **characterised in that** the vent line (5b) has a multi-part configuration, sections (16a, b) of the vent line (5b) guided one inside the other having a telescopic configuration.

5. Fuel container according to Claim 4, **characterised in that** the parts of the vent line (5b) which are guided one inside the other are sealed with respect to one another.

6. Fuel container according to either of Claims 2 and 3, **characterised in that** the vent line (5b) is supported between its connection points against gravitational force acting in the installed position.

7. Fuel container according to Claim 6, **characterised in that** the vent line (5b) is suspended from the container wall by means of at least one retaining clip.

8. Fuel container according to Claim 7, **characterised in that** the retaining clip is in the form of a retaining spring (12).

9. Fuel container according to any one of Claims 2 to 8, **characterised in that** at least one connection point to the inner wall of the container and one opening through the container wall are provided on sections of the container wall which extend at an angle to one another.

## Revendications

1. Procédé de fabrication d'un réservoir de carburant pour véhicule automobile, en matière plastique thermoplastique, comprenant la fabrication de préformes en forme de bandes (1), la mise en forme des préformes lors du premier chauffage dans un outil de formage en plusieurs parties (3a, 3b, 3c) dans une première étape pour obtenir des produits intermédiaires en forme de coque (6a, 6b) et dans une deuxième étape dans le même outil de formage pour obtenir un réservoir fermé d'une seule pièce, au moins un dispositif de remplissage de réservoir (5) et/ou de désaérage de service étant fixé entre la première et la deuxième étape au niveau d'au moins une paroi intérieure (7a) d'un produit intermédiaire, de telle sorte qu'au moins une partie prémontée du dispositif de remplissage de réservoir et/ou de désaérage de service, comprenant une pièce de raccordement (5c), au moins une conduite de désaérage (5b) et au moins un composant fonctionnel, soit connectée par engagement par correspondance de formes et/ou par liaison de matière à la paroi intérieure, la paroi du produit intérieur étant traversée par la pièce de raccordement lors du montage en utilisant au moins une portion de conduite de longueur variable en tant que partie de la conduite de désaérage, l'ampleur de la variation de longueur de la conduite de désaérage étant choisie de telle sorte qu'elle corresponde à la distance parcourue par la pièce de raccordement lorsqu'elle traverse la paroi du produit intermédiaire.

2. Réservoir de carburant pour véhicule automobile, en matière plastique thermoplastique, comprenant au moins un dispositif de remplissage de réservoir et/ou de désaérage de service (5), qui est disposé à l'intérieur du réservoir de carburant, au moins une conduite de désaérage (5b) s'étendant entre un point de raccordement fixe au niveau de la paroi intérieur du réservoir et un passage à travers la paroi du réservoir, la conduite de désaérage (5b) étant réalisée avec une longueur variable, **caractérisé en ce que** l'ampleur de la variation de longueur de la conduite de désaérage (5b) correspond au degré de liberté de montage dans la direction longitudinale de la conduite de désaérage (5b) lors de la fixation du dispositif de remplissage de réservoir et/ou de désaérage de service (5) à la paroi intérieure du réservoir.

3. Réservoir de carburant selon la revendication 2, **caractérisé en ce que** la conduite de désaérage (5b) est réalisée au moins en partie sous forme ondulée ou sous forme de soufflet.

4. Réservoir de carburant selon l'une quelconque des revendications 2 ou 3, **caractérisé en ce que** la conduite de désaérage (5b) est réalisée en plusieurs parties, des portions (16a,b) de la conduite de désaérage (5b) guidées les unes dans les autres étant réalisées sous forme télescopique.

5. Réservoir de carburant selon la revendication 4, **caractérisé en ce que** les parties guidées les unes dans les autres de la conduite de désaérage (5b) sont étanchéifiées les unes par rapport aux autres.

6. Réservoir de carburant selon l'une quelconque des revendications 2 ou 3, **caractérisé en ce que** la conduite de désaérage (5b) est supportée entre ses points de raccordement à l'encontre de la force de pesanteur agissant dans la position d'installation.

7. Réservoir de carburant selon la revendication 6, **caractérisé en ce que** la conduite de désaérage (5b) est suspendue au moyen d'au moins une pince de retenue à la paroi du réservoir.

8. Réservoir de carburant selon la revendication 7, **caractérisé en ce que** la pince de retenue est réalisée sous forme de ressort de retenue (12).

9. Réservoir de carburant selon l'une quelconque des revendications 2 à 8, **caractérisé en ce qu'**au moins un point de raccordement à la paroi intérieure du réservoir et un passage à travers la paroi du réservoir sont prévus au niveau de portions de la paroi du réservoir s'étendant suivant un angle l'une par rapport à l'autre.
